# EUROPÄISCHE PATENTANMELDUNG

(11) **EP 2 431 232 A1**
(43) Veröffentlichungstag der Anmeldung: **21.03.2012**
(21) Anmeldenummer: 11466025.1
(22) Anmeldetag: 08.09.2011
(51) Int. Cl.: B60R 13/02, F16B 5/06

(54) **System für die Verbindung von Fahrzeugteilen**

(30) Priorität: 15.09.2010 CZ 20100690
(71) Anmelder: Skoda Auto A.S., 293 60 Mladá Boleslav (CZ)
(72) Erfinder: Novotny, Josef, 518 01 (CZ)

(57) **Zusammenfassung**

Ein System für die Verbindung von Fahrzeugteilen, insbesondere der Verkleidungsteilen, mit der Fahrzeugkarosserie, wobei das erste Teil (1) ein integriertes primäres Verbindungselement (3) für den unmittelbaren Formkontakt mit dem zweiten Teil (2) aufweist. Das erste Teil (1) weist ferner ein Befestigungselement (4) für das separate sekundäre Verbindungselement (8) auf, wobei Mittels des sekundären Verbindungselements (8) das erste Teil (1) mit dem zweiten Teil (2) nach einem Funktionsfehler des primären Verbindungselements (3) verbunden werden kann. Das sekundäres Verbindungselement (8) stimmt mit dem gleichen Bereich (7) des zweiten Teils (2) wie das primäre Verbindungselement (3) überein. Beim Abbruch des primären Verbindungselementes (3) muss nicht der Austausch des kompletten ersten Teils (1), sondern eine Reparatur durch Einbau des sekundären Verbindungselementes (8) vorgenommen werden.

## Beschreibung

### Technisches Gebiet

Die Erfindung betrifft ein System für die Verbindung von Fahrzeugteilen, insbesondere für die Verbindung von Verkleidungsteilen, wie z.B. der Innenverkleidung der Säulen, des Kofferraumes usw., mit der Fahrzeugkarosserie.

### Bisheriger Stand der Technik

In der Fahrzeugkonstruktion werden häufig Verkleidungsteile verwendet, die zerlegbar an der Fahrzeuggrundstruktur befestigt sind. Diese Teile decken die Innenkonstruktion des Fahrzeuges, die Kabelstränge usw. ab, bilden den endgültigen ästhetischen Eindruck aus und können beim Unfall die Insassen vor Verletzung schützen. Es handelt sich dabei insbesondere um die Innenverkleidung der Säulen, des Kofferraumes, um die Türverkleidungen u.ä. Die Verkleidung weist meistens einige Verbindungs-Clips auf, die in die Öffnungen oder Gegenstücke in der Grundstruktur des Fahrzeuges eingerastet werden. Solche Ausführung trägt deutlich zur schnelleren und leichteren Montage bei.

Die Clips sind eigenständige Teile und werden zerlegbar zur Verkleidung befestigt. Bei eventueller Demontage wegen Servicearbeiten können die beschädigten Clips bei Erhaltung des Gesamtteils der Verkleidung ausgewechselt werden. Solche Lösung ist jedoch teuer, da sie viele eigenständige Teile enthält, die vor dem Einbau der Verkleidung ins Fahrzeug an die Verkleidung angebracht werden müssen.

Um den Preis und Arbeitsaufwand der Teilevorbereitung vor der Endmontage zu reduzieren werden heute auch integrierte Befestigungs-Clips verwendet, die mit der Verkleidung oder einem Teil davon als eine Einheit ausgestaltet und nicht zerlegbar verbunden sind. Die Clips werden zusammen mit diesem Teil gefertigt, z.B. durch das Kunststoffspritzgussverfahren. Der Nachteil solcher Lösung liegt darin, dass bei Beschädigung eines Clips beim Ausbau das komplette Verkleidungsteil ausgewechselt werden muss. Dadurch werden die Kosten der Gewährleistungsreparaturen und des nachfolgenden Service deutlich erhöht.

### Darstellung der Erfindung

Die Aufgabe wird durch ein System für die Verbindung der Fahrzeugteile, insbesondere der Verkleidungsteile mit der Fahrzeugkarosserie gelöst. Das erste zu verbindende Teil, insbesondere die Verkleidung, weist ein integriertes primäres Verbindungselement für den unmittelbaren Formkontakt mit dem zweiten Teil, namentlich der Fahrzeuggrundstruktur, auf. Das erste Teil weist ferner ein Befestigungselement für das separate sekundäre Verbindungselement auf. Mittels des sekundären Verbindungselements kann das erste Teil mit dem zweiten Teil nach einem Funktionsfehler des primären Verbindungselements verbunden werden, wobei das sekundäre Verbindungselement mit dem gleichen Bereich des zweiten Teils wie das primäre Verbindungselement übereinstimmt. Wird beim Ausbau des Verkleidungsteils das primäre Verbindungselement beschädigt, muss nicht das komplette Verkleidungsteil ausgewechselt werden, sondern es reicht aus, das sekundäre Verbindungselement einzubauen. Dadurch wird ein sehr geringer Fertigungs- und Montagepreis bei der Erstherstellung und gleichzeitig die geringen Kosten bei einer eventuellen Fahrzeugreparatur beibehalten.

Das Befestigungselement ist vorteilhaft nach der Beseitigung wenigstens eines Teils des primären Verbindungselementes zugänglich. Nach einer Beschädigung wird das primäre Element vom ersten Teil abgeschnitten oder abgebrochen, wodurch das Befestigungselement aufgedeckt wird. Dadurch wird die Nutzung des gleichen Bereichs des zweiten Teils für den Kontakt mit dem sekundären Verbindungselement wie für den Kontakt mit dem primären Verbindungselement ermöglicht. Das zweite Teil muss also bei einem Wechsel nicht besonders angepasst werden.

Das primäre Verbindungselement weist vorteilhaft eine vorprogrammierte Bruchstelle auf. Dadurch wird seine Beschädigung an dieser vorprogrammierten Bruchstelle erfolgen und seine Beseitigung vereinfacht.

Das erste Teil weist vorteilhaft eine Basis für das Aufsetzen auf das zweite Teil auf, aus der das primäre Verbindungselement herausragt, wobei ein Befestigungselement für das sekundäre Verbindungselement an dieser Basis ausgestaltet ist. Dadurch kann einfach die gleiche Position des sekundären Verbindungselementes wie beim primären Verbindungselement beibehalten werden. Das Befestigungselement stellt in einer vorteilhaften Ausführung eine Öffnung dar, die mindestens von einer Seite durch das primäre Verbindungselement umschlossen ist. Nach Beseitigung des beschädigten primären Elementes wird das sekundäre Verbindungselement in die Öffnung eingeschoben, wodurch am einfachsten die gleiche Position wie beim primären Verbindungselement erzielt wird. Die Öffnung kann z.B. ovalförmig sein-in dem Fall wird das sekundäre Verbindungselement axial eingeschoben und durch eine Drehung ähnlich wie beim Bajonettverschluss gesichert. Oder kann die Öffnung wenigstens einseitig offen sein und das sekundäre Verbindungselement seitlich eingeschoben wird. Selbstverständlich können auch andere übliche Arten der Clips-Befestigung verwendet werden.

Die vorprogrammierte Bruchstelle ist vorteilhaft in dem Übergang zwischen dem primären Verbindungselement und der Öffnung ausgebildet. Da das primäre Verbindungselement gerade an dieser Stelle abbricht, wird der Einbau des sekundären Verbindungselements vereinfacht und beschleunigt. Vollständige Beseitigung des primären Verbindungselementes kann eventuell auch ohne Verwendung von Schneidwerkzeugen erfolgen, wobei das erste Teil nach Beseitigung keineswegs entgratet werden muss und der Einbau des sekundären Verbindungselementes in die als Befestigungselement dienende Öffnung sofort erfolgen kann.

### Übersicht der Figuren der Zeichnungen

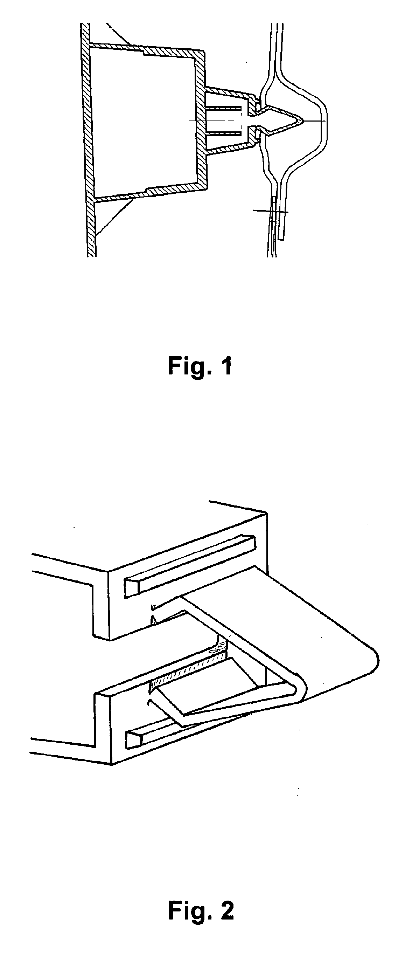

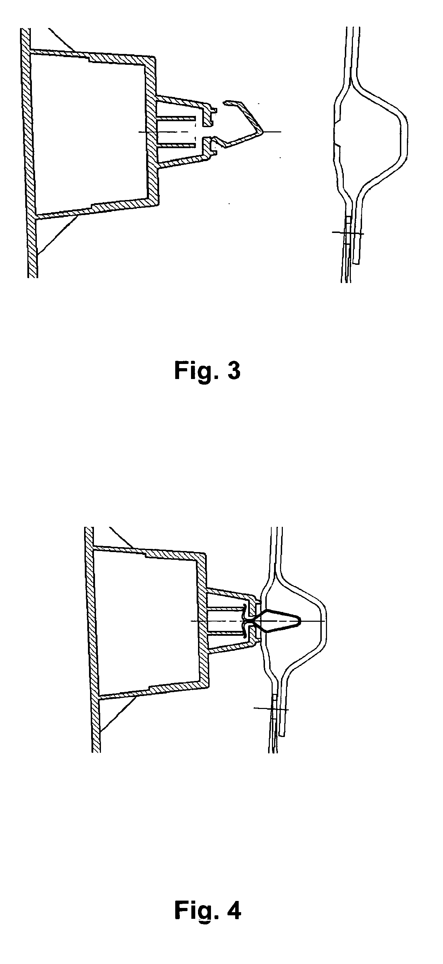

Die Fig. 1 stellt einen Schnitt der erfindungsgemäßen Verbindung mit dem primären Verbindungselement dar. In der Fig. 2 ist das erste Teil mit einem Detail des primären Verbindungselementes perspektivisch dargestellt. Die Fig. 3 stellt einen Schnitt des ersten Teiles mit dem beschädigten primären Verbindungselement und die Fig. 4 einen Schnitt der erfindungsgemäßen Verbindung mit dem sekundären Verbindungselement dar.

### Ausführungsbeispiel der Erfindung

Die Fig. 1 stellt im Schnitt die Verbindung des Verkleidungsteils **1** mit der Karosserie **2** mittels des primären Verbindungselementes **3** dar. Die Verkleidung **1** einschl. des primären Verbindungselements **3**, gebildet durch einen elastischen Clip, ist durch Kunststoffspritzgussverfahren ausgebildet. In der Karosserie ist eine Öffnung **7** ausgebildet, deren Form dem primären Verbindungselement **3** entspricht. An der der Karosserie **2** zugewandten Seite ist die Verkleidung **1** mit einer Basis **6** abgeschlossen, in der eine einseitig offene Öffnung **4** ausgebildet ist. Die Öffnung **4** ist von zwei Seiten durch das primäre Verbindungselement **3** umschlossen, das aus der Basis **6** herausragt. An den Übergangsstellen der Basis **6** in die Schenkel des primären Verbindungelementes **6** sind Einschnitte **5** ausgebildet, welche vorprogrammierte Bruchstellen auf dem primären Verbindungselement **3** schaffen. Zum eventuellen Abbruch des primären Verbindungselementes kommt es in einem dieser Einschnitte **5**.

In Fig. 2 ist die Situation nach dem Ausbau der Verkleidung **1** dargestellt, z.B. bei einer Reparatur der durch die Verkleidung abgedeckten Kabelstränge. Beim Ausbau wurde die Höchstkraft am primären Verbindungselement **3** überschritten und dieser an der Stelle des Einschnittes **5** abgebrochen ist. Für die Reparatur der Verbindung und Wiedereinbau muss das primäre Verbindungselement **3** an der Stelle des restlichen Einschnittes **5** z.B. durch Abbrechen oder Wegschneiden mit einem Messer beseitigt werden. Bei geeigneter Konstruktion des Einschnittes **5** müssen keine Schneidwerkzeuge verwendet werden, wobei an der Basis **6** keine Grate nach dem primären Verbindungselement **3** bleiben, die dem Einbau des sekundären Verbindungselementes **8** oder dem Kontakt mit der Karosserie **2** nach Wiedereinbau hindern würden.

Nach Beseitigung des primären Verbindungselementes **3** wird in die Öffnung **4** seitlich das sekundäre Verbindungselement **8** eingeschoben, wobei die Konstruktion vorteilhaft so ausgestaltet ist, damit ein austauschbarer Standardclip einzusetzen wäre, der z.B. für Befestigung anderer Fahrzeugteile auch genutzt wird. Danach folgt der Wiedereinbau der Verkleidung **1** in die Karosserie **2**, wobei das sekundäre Verbindungselement **8** in die Öffnung **7** eingreift, in der vor dem Ausbau das primäre Verbindungselement **3** angeordnet war. Die entstandenen Reparaturkosten werden so nicht um den Preis der Verkleidung **1,** die als eine Einheit auszutauschen notwendig wäre, sondern nur um den Preis des sekundären Verbindungselementes **8** erhöht.

Die Kraft, bei der zum Abbruch des primären Verbindungselementes **3** kommt, ergibt sich aus dessen Konstruktion und der Form des Einschnittes **5**. Sie kann auch so eingestellt werden, damit beim Ausbau der Verkleidung **1** nicht automatisch zum Abbruch kommt, sondern erst bei ungünstigen Bedingungen, z.B. beim Ausbau durch Ziehen außerhalb der Verbindungsachse, beim Brechen, Reißen usw. Dadurch wird auch die Notwendigkeit das sekundäre Verbindungselement **8** auch beim standardgerechten Ausbauvorgang einzubauen vermieden.

Der Einschnitt **5** kann auch komplett entfallen, dabei muss jedoch die Festigkeit der sonstigen Bereiche der Verkleidung **1** berücksichtigt werden, damit keine Beschädigung außerhalb des primären Verbindungselementes **3** vorkommt. Geeignet ist auch das Verbindungselement **3** so zu entwerfen, dass es beim Ausbau nicht komplett von der Verkleidung **1** abgebrochen wird, da das abgebrochene Teil in dem Hohlraum der Karosserie **2** bleiben könnte, wo es dem vollständigen Einstecken des sekundären Verbindungselementes **8** hindern würde. Dies kann dadurch erreicht werden, dass die vorprogrammierte Bruchstelle in Form des Einschnittes **5** nur an einem der Schenkel des primären Verbindungselementes **3** ausgebildet wird, wobei der zweite Schenkel unausgedünnt bleibt.

### Gewerbliche Anwendbarkeit

Das System für die Verbindung von Fahrzeugteilen kann bei allen Verbindungen eingesetzt werden, bei denen wenigstens ein der zu verbindenden Teile aus Kunststoff ausgebildet wird. Geeignet ist es insbesondere für die Verbindung der Teile der Innen- sowie Außenverkleidung mit der Fahrzeugkarosserie.

## Patentansprüche

1. Das System für die Verbindung von Fahrzeugteilen, insbesondere der Verkleidungsteile, mit der Fahrzeugkarosserie, wobei der erste Teil (1) ein integriertes primäres Verbindungselement (3) für den unmittelbaren Formkontakt mit dem zweiten Teil (2) aufweist, **dadurch gekennzeichnet, dass** das erste Teil (1) ein Befestigungselement (4) für das separate sekundäre Verbindungselement (8) aufweist, wobei mittels des sekundären Verbindungselements (8) das erste Teil (1) mit dem zweiten Teil (2) nach einem Funktionsfehler des primären Verbindungselements (3) verbunden werden kann und das sekundäre Verbindungselement (8) mit dem gleichen Bereich (7) des zweiten Teils (2) wie das primäre Verbindungselement (3) übereinstimmt.

2. Das System für die Verbindung von Fahrzeugteilen nach Anspruch 1, **dadurch gekennzeichnet, dass** das Befestigungselement (4) nach der Beseitigung wenigstens eines Teils des primären Verbindungselementes (3) zugänglich ist.

3. Das System für die Verbindung von Fahrzeugteilen nach einem der vorgenannten Ansprüche, **dadurch gekennzeichnet, dass** das primäre Verbindungselement (3) wenigstens eine vorprogrammierte Bruchstelle (5) aufweist.

4. Das System für die Verbindung von Fahrzeugteilen nach einem der vorgenannten Ansprüche, **dadurch gekennzeichnet, dass** das erste Teile (1) für das Aufsetzen auf das zweite Teil (2) eine Basis (6) aufweist, aus der das primäre Verbindungselement (3) herausragt, und dass das Befestigungselement (4) an dieser Basis (6) ausgestaltet ist.

5. Das System für die Verbindung von Fahrzeugteilen nach einem der vorgenannten Ansprüche, **dadurch gekennzeichnet, dass** das Befestigungselement (4) eine Öffnung darstellt, die mindestens von einer Seite durch das primäre Verbindungselement (3) umschlossen ist.

6. Das System für die Verbindung von Fahrzeugteilen nach den Ansprüchen 3 und 5, **dadurch gekennzeichnet, dass** die vorprogrammierte Bruchstelle (5) in dem Übergang zwischen dem primären Verbindungselement (3) und dem Befestigungselement (4) ausgebildet ist.
